# EUROPEAN PATENT SPECIFICATION

(11) **EP 2 378 219 B1**
(45) Date of publication and mention of the grant of the patent: **20.04.2016**
(21) Application number: 09837385.5
(22) Date of filing: 26.10.2009
(51) Int. Cl.: F24J 2/46, B08B 3/02, B08B 1/00, B60P 3/14

(54) **METHOD FOR CLEANING SOLAR PANELS**
VERFAHREN ZUR REINIGUNG VON SOLARZELLEN
PROCÉDÉ DE NETTOYAGE DE PANNEAUX SOLAIRES

(30) Priority: 09.01.2009 ES 200900023 U
(43) Date of publication of application: 19.10.2011
(73) Proprietor: Solar Bright, S.L., 02007 Albacete (ES)
(72) Inventor: GONZALEZ RODRIGUEZ, Antonio, E-13071 Ciudad Real (ES); RONCERO SANCHEZ-ELIPE, Pedro Luis, E-13071 Ciudad Real (ES); MORALES HERRERA, Rafael, E-13071 Ciudad Real (ES); CORTAZAR PEREZ, Osvaldo Daniel, E-13071 Ciudad Real (ES); CASTILLO GARCIA, Fernando José, E-02006 Albacete (ES); HUNGRÍA DIAZ DEL CASTILLO, Pedro Antonio, E-13071 Ciudad Real (ES); PARREÑO TORRES, Alfonso, E-02006 Albacete (ES); GOMEZ LOPEZ, Luis Miguel, E-02006 Albacete (ES); FELIU BATTLE, Vicente, E-13071 CiudadReal (ES); MONTERO DOMINGUEZ, Miguel, E-02001 Albacete (ES)
(74) Representative: Durán Moya, Carlos
(86) International application number: PCT/ES2009/000513
(87) International publication number: WO 2010/079242

(56) References cited:
- EP-A2- 1 764 165
- DE-A1- 4 220 599
- DE-A1- 4 423 376
- DE-U1-202007 001 488
- DE-U1-202007 006 491
- ES-U- 1 068 713
- GB-A- 2 392 826
- NL-C1- 1 028 931
- NL-C2- 2 000 303
- NL-C2- 2 000 303
- US-A- 6 112 367

## Description

### Description

The present invention discloses a method of cleaning solar panels.

Due to the growing interest in solar energy, numerous studies have been carried out in recent years which focus on improving the energy output of solar energy farms and extending their length of service for as long as possible. Among these stand out studies to analyse and quantify the impact of accumulated dirt on the output of solar panels. They all agree on the need to periodically clean solar panels to improve their output. Dirt results mainly from the accumulation of dust, mud and substances flushed out by rain, deposits of materials due to the use of inappropriate water-based cleaning methods, guano or pollution from nearby industries. The studies carried out at various solar farms demonstrate that dirt can reduce output by up to 25 %.

Traditionally, solar panels have been cleaned manually using purified water and/or suitable cleaning substances. However, for cleaning large areas or expanses with numerous solar panels, the manual system is slow, inefficient and costly. Mechanical devices for cleaning solar panels have been developed recently. These devices are fixed on the panels or are moved over each one, and a large number of these devices are needed to clean the entire solar farm effectively, with the consequent increase in cost.

Document NL 2000303C reveals a generic method for the cleaning of glass surfaces.

Utility model ES1069495U disclosed vehicles which are equipped with tilting arms and can spray water and cleaning products through nozzles onto the solar panels. Although these vehicles simplify the manual work, they have no technical advantages over known manual methods from the point of view of the cleaning method and products used in said method.

Spanish patent ES 1025055 discloses a self-propelled cleaning machine for tunnels, walls and similar structures in which a self-propelled vehicle carrying a water tank sprays said water progressively over the wall to be cleaned assisted by contact brushes. No provision is made for the use of steam. Utility model ES 265877U relates to a tunnel-cleaning vehicle which comprises a tank, bristle brushes and an arm for the application of the brushes. However, no mention is made of the use of steam, nor of cleaning solar panels. Spanish patent ES 2202181 relates to a device for cleaning and disinfecting surfaces designed for cleaning floors, which has a mechanical cleaning and disinfection device by the application of steam. However, no reference is made to self-propelled devices for cleaning solar panels, nor to steam cleaning.

Spanish patent ES 2267393 relates to washing equipment for a parabolic channel collector in which a washing vehicle is moved along fixed guides and which has nozzles for spraying water towards the parabolic mirror and recovering the cleaning water. However, no reference is made to cleaning solar panels by the application of steam.

Utility model ES 296855U discloses a self-supporting machine for cleaning large surfaces, such as tunnels and underground railways or aircraft, which has means for spraying water, supported by a telescopic arm.

Document DE 4423376 A1 discloses a vehicle with a platform which can be raised by an articulated structure and with a platform carrying an installation for spraying the cleaning jets, but does not refer to the use of steam for cleaning solar panels.

Utility model ES1068713U discloses a cleaning device for solar panels using a cylindrical brush in the form of a roller, with water and soap dispensers.

European patent application EP0 668 400 A1 discloses equipment for cleaning surfaces above ground for example vertical surfaces such as tunnel walls, highway equipment, panels, etc. which has a support with multiple nozzles for spraying water.

Utility model ES 1034481 U relates to a machine for cleaning tunnels, walls and similar surfaces in which hot water is sprayed onto the surface to be cleaned, but no mention is made of the use of steam.

British patent application GB 2392826 A discloses a method and equipment for steam-cleaning a surface, which comprises a head for distributing jets of steam in a manual application device which comprises suction means to remove dirt from the surface to be cleaned. It makes no reference to the use of rows of steam dispensers for cleaning solar panels.

A need therefore exists in this technical sector for methods and equipment to clean more effectively, rapidly and economically large installations of solar panels with many panels, usually arranged in rows over a more or less flat surface which in many cases is not entirely suitable for vehicular traffic.

The inventors have therefore carried out numerous experiments and tests which have resulted in the present invention.

The object of the present invention is to disclose a new method for cleaning solar panels designed to achieve far greater cleaning efficiency.

The method according to the present invention is based on combining spraying steam on the surface of the solar panels to be cleaned with the simultaneous action of gentle mechanical cleaning elements which engage the surface of the solar panel at the same time as the steam is sprayed. The simultaneous action of steam and cleaning elements may be combined in a not claimed embodiment with the use of special cleaning products if necessary, according to the type of deposits to be removed.

In particular, in a not claimed embodiment of the present invention, additives may be used before cleaning, such as degreasers or other products. Additives that delay the accumulation of dirt on the panels may also be applied, in other words, additives applied after the panel has been cleaned.

By applying the method according to the present invention using steam dispensers, more complete cleaning of the panels can be achieved compared with the methods known at present, including those that use water. At the same time, water consumption is significantly reduced, which may be of great interest in areas where the water supply is scarce and, in all cases, to achieve greater operating autonomy with a particular tank capacity.

When adjusting the parameters of the cleaning method, account is taken of the maximum permissible pressure on the panel, and the maximum temperature that the panel may reach according to the instructions of the manufacturer, together with the speed of movement of the cleaning elements. The maximum acceptable pressure will vary depending on the precise features of the panel to be cleaned, although an indicative value which will be valid for most of the panels known at present, is 1.5 bar to avoid damage to the panel. With regard to the maximum temperature, account must be taken of the fact that the panel must not exceed a temperature of approximately 70°C to avoid damage and loss of functionality. However, it should be understood that the maximum temperature will vary according to the precise construction of the solar panel and technical developments over time.

The speed at which the cleaning elements move over the surface of the solar panel will vary between broad limits depending on how dirty the panels are and the predominant nature of the deposits to be removed. However, based on the accumulated experience of the inventors, linear movement values for the cleaning elements of over 1 km per hour are recommended to ensure that the panel is not exposed to high temperatures for a prolonged period, ensuring compliance with the temperature specification.

The steam pressure and temperature on exit leaving the dispensers will take account of the maximum pressure on the panel and the maximum temperature already discussed, as well as water consumption and autonomy.

It must be borne in mind that the approximate values of the parameters indicated in this description are dependent on the technical features of the solar panels available at any time, and it should be understood that said features vary from time to time as new technological developments in solar panels are introduced.

The application of steam under particular pressure and temperature conditions to the solar panel has been shown to be essential to achieve ideal and rapid cleaning of the solar panels. The method according to the present invention provides for a combination of steam dispensers and gentle cleaning elements which act directly on the panel. In this case, the steam is sprayed at a particular pressure and temperature some distance from the panel to be cleaned and the gentle cleaning elements make direct contact with the panel. As stated, the action will be simultaneous, so that the steam dispensers and gentle cleaning elements act simultaneously on the solar panel.

The method according to the present invention provides for autonomous preparation of the water to be vaporised, and the method in its entirety will therefore comprise the following:
a) Provision of water storage to receive water from the external sources available in the area, regardless of its purity or otherwise.
b) Water treatment, which is based on transforming the water from the non-controlled external sources into water with high purity specifications in order to be transformed into steam. Accordingly, in the treatment phase the water is cleaned by mechanical filters and ion exchange filters using resins.
c) Steam generation from the water purified at stage b) which is vaporised at a temperature of between 150°C and 200°C, and at a pressure such that on input to the steam distribution system an effective pressure of between 2.5 and 5 bar is available.
d) Spraying the steam through dispensers which act in combination with gentle cleaning elements, and are located at a predetermined distance of between 50 mm and 300 mm. The angle of incidence of the steam will vary between approximately 30° and 90° to the plane of the panel to be cleaned.

The cleaning equipment for performing the method according to the present invention basically comprises a vehicle with its own propulsion system and with an articulated arm or arms carrying a cleaning head which acts as a support for the steam dispensers; or, for the combined use of steam and cleaning elements, a system of steam dispensers located some distance from the panel, and a set of cleaning elements with specific features which act directly on the surface of the panels. The vehicle is equipped with water storage means, the water treatment system and steam generator supplied by the treated water and capable of generating an output suitable for the set of steam dispensers of approximately 7.3 litres per minute maximum, at a temperature of between approximately 150°C and 200°C, and an effective steam pressure such that on entry to the steam distribution system a pressure of between approximately 2.5 and 5 bar is available. The vehicle has a steam distribution system designed to take the steam produced in the generator to the set of dispensing elements, which ensures a continuous steam supply throughout the distribution system to obtain uniform cleaning of the panels.

The steam is distributed on the panels to be cleaned by a projecting structure carrying the steam distribution system and the gentle, mechanically actuated cleaning elements, such as rollers or bands made of silicone, rubber or other synthetic material to make it easier to dislodge the dirt from the panels.

The accompanying drawings, given as an explanatory but not limiting example, provide a better understanding of the present invention.
Fig. 1 shows diagrammatically all the operational phases of the method.
Fig. 2 is a diagrammatic top view of a set of elements designed to carry out the present invention.
Fig. 3 is a perspective view of the elements illustrated in Fig. 2.
Fig. 4 shows diagrammatically an arrangement of steam dispensers.
Fig. 5 shows diagrammatically the arrangement of the steam dispensing and gentle cleaning elements of the present invention.
Fig. 6 is a perspective view of a portion of a gentle cleaning element.
Fig. 7 shows diagrammatically the relative position of the steam dispensers in relation to the surface of the panel to be cleaned.
Fig. 8 is a diagrammatic illustration of a frame carrying the cleaning devices, associated with the projecting structure coupled to the moveable vehicle.

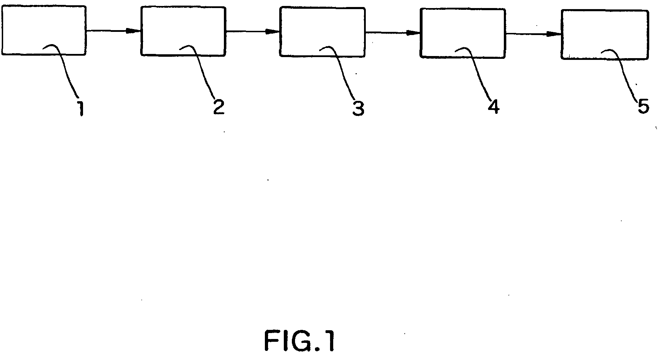

As illustrated in the figures, the method according to the present invention consists of a set of operations as shown in Fig. 1. This figure shows firstly an initial operation for providing water from supply sources close to the location of the solar installation to be cleaned, bearing in mind that in most cases it will be untreated water. Next, in phase 2, the water collected and made available in phase 1 is treated, using appropriate means of both physical purification - separating dust, earth, organic material, etc. - and chemical purification - using ion exchange resin filter treatments - resulting.in water with a suitable degree of purity for obtaining steam without damaging the components used for steam generation and dispensing. The operation in which the purified water is transformed into steam is shown as phase 3 in which the water is turned into steam at a temperature suited to the cleaning treatment, said temperature being in part limited by the features of the solar panel which may resist a particular range of temperatures. At present, for known solar panels, the steam temperature should be between approximately 150° C and 200° C, and the effective steam pressure on input to the distribution system should be between approximately 2.5 and 5 bar. However, these features will vary if technological advances are introduced in solar panels, which may eventually allow steam to be applied at far higher temperatures and pressures. Next, is the steam distribution operation, illustrated as phase 4, which is carried out using a suitable connection system between the steam generator and the dispensing elements, which are shown in phase 5 and comprise multiple dispensers located at varying distances from the panels to be cleaned. Said distance is between approximately 50 mm and 300 mm, if the panels are cleaned using the present invention.

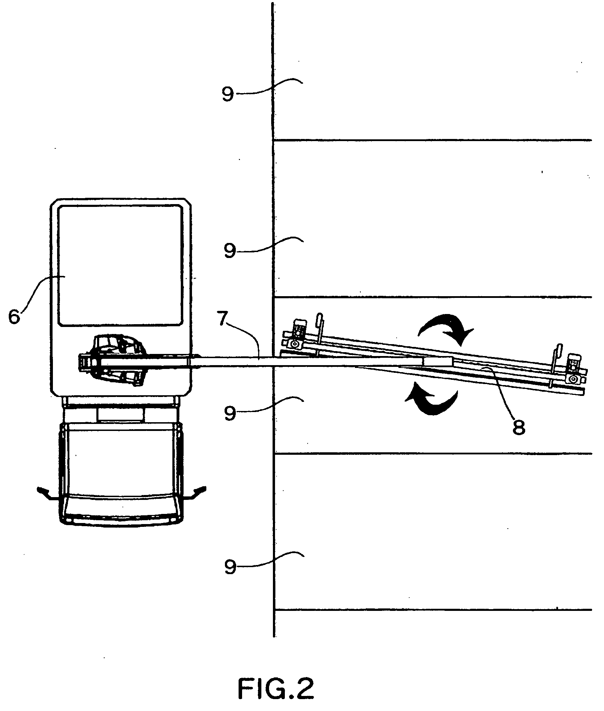

Fig. 2 shows diagrammatically in a top view from above the elements comprising the invention to clean the solar panels. First, a vehicle -6- provided with its own movement means and with all the elements to perform the method is shown diagrammatically in Fig. 1, that is to say, a tank for collecting water from the outside, water treatment devices, a steam generator and a steam distribution system which basically comprises a projecting structure -7- connected to the vehicle and having a steam dispenser support -8- such that each support -8- will cover the entire width of the panels -9-, which are shown diagrammatically as adjacent rectangular surfaces although, as will be understood, they are usually arranged in rows possibly separated from one another and not necessarily coplanar.

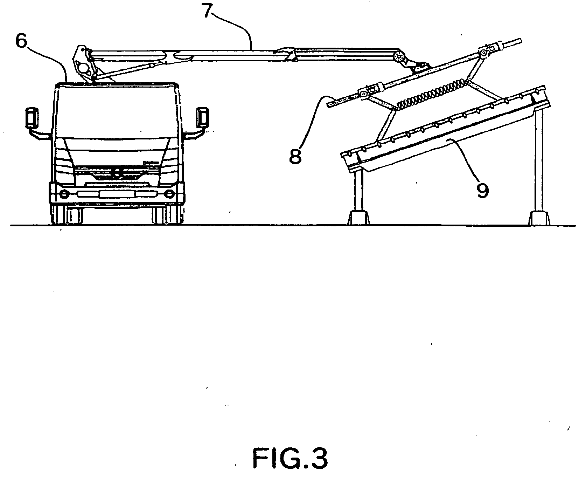

Fig. 3 shows the same elements in a perspective view.

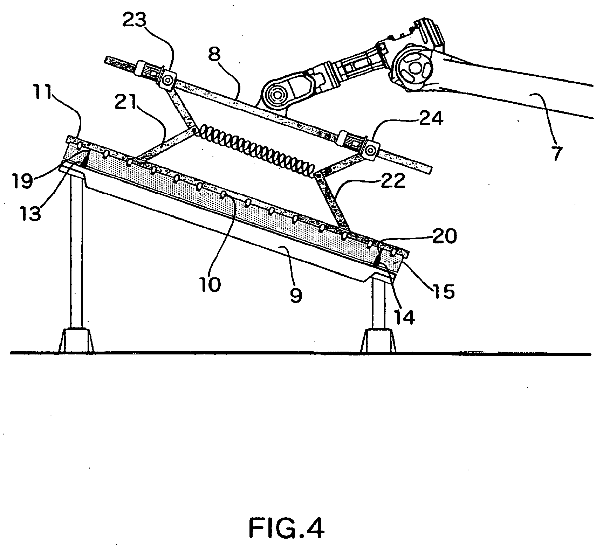

Fig. 4 is a diagrammatic illustration of an arrangement of steam dispensers which provides for the steam dispensers to act directly on the surface of the panels. In this case, the support -8- has multiple dispensing nozzles -10-situated a very short distance from the surface of the panel -9-.

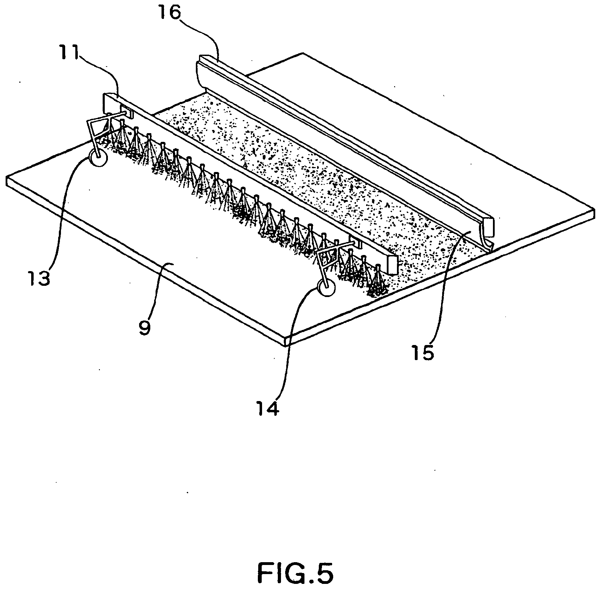

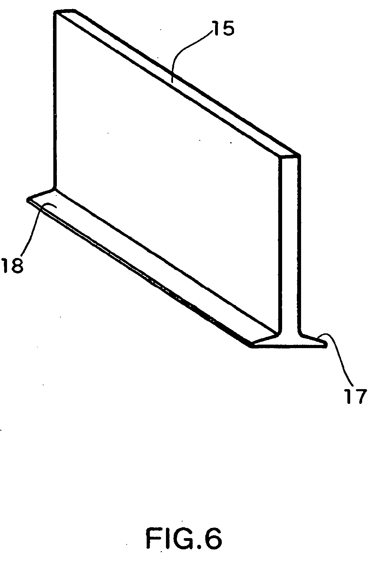

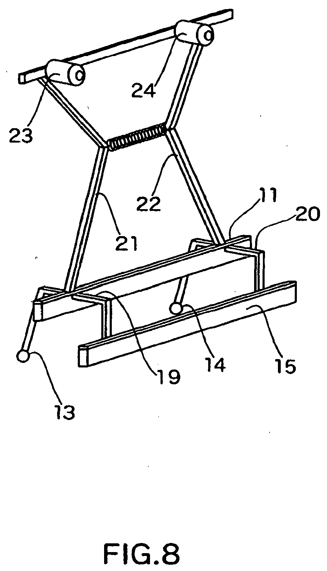

In the present invention provision is made for combining the steam dispensers and gentle cleaning elements -15-, illustrated diagrammatically in Figs. 5 and 8, which show a support -11- carrying multiple dispensers -10- for spraying steam jets onto the surface of the panel to be cleaned, designated by the same reference numeral -9- as in the first embodiment. The separation between the dispensers -10- and the panel -9- is adjustable according to the specific features of each cleaning treatment, and depends above all on the degree of soiling, the type of impurities to be cleaned and other similar questions. Accordingly, position sensing elements such as mechanical feelers -13-and -14- are provided by which a central processor can be adjusted by appropriate mechanical devices, actuated electrically, hydraulically or by any other suitable means, so as to transform previously programmed instructions into instructions for actuating the dispenser support. As stated earlier, the method according to the present invention comprises the simultaneous action of gentle cleaning elements consisting, for example, of rollers or profiles made of silicone, rubber or other synthetic material -15- mounted on the support -16- with the most suitable structure for performing the cleaning action, as illustrated in Fig. 6. This figure shows the laminar element made of medium-hard silicone or similar material -15- which has lower edges - 17- and -18- which act on the panel element to be cleaned, as shown in Fig. 5. Clearly, the precise form of the cleaning element may vary within wide limits, and it may have only one of the two edges indicated, in other words, it may be L-shaped, or may be of any other form, for example a single blade, scraping edges, a roller or other structure.

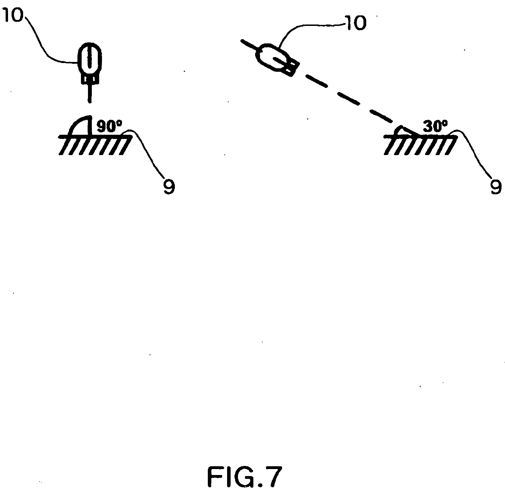

Fig. 7 illustrates diagrammatically the positions of the steam dispensers -10- relative to the surface of the solar panels to be cleaned -9-. The arrangement consists of forming an angle between the dispensers and the panel surfaces, the angle of the axis of the dispenser varying relative to the panel surface by between about 30° and 90° (perpendicular arrangement).

The assembly forming the projecting structure -7- and the support -8- for the dispensers and cleaning elements may, be of a suitable form to control both the steam dispensers and the gentle cleaning elements. Fig. 8 shows, by way of example, an element in which the support -11- for the steam dispensers and the silicone or similar cleaning element -15- can be seen, associated by articulated arms - 19- and -20-, connected to arms -21- and -22-, which are also articulated, and which are acted upon by the electrical actuation devices -23- and -24- from the upper portion of the support fixed to the projecting structure of the vehicle.

The support -8- for the steam distribution dispensers and possibly the gentle cleaning elements is adjustable with regard to the angle formed with the transverse axis of the panels, in other words, the axis parallel to the lower edge of the panels -9-, and may adopt varying angles depending on the work to be done, an approximate value being 70° between the longitudinal axis of said support -8- and the transverse axis of the panels, in other words, the one parallel to the lower edges of the panels -9-.

## Claims

1. Method of cleaning solar panels (9), in which steam from a distribution system (10) is sprayed in multiple individual jets at a pressure and temperature which depend on the toughness of the solar panel to be cleaned and the impurities to be removed, the temperature of the steam varying between approximately 150°C and 200°C and the steam pressure on entry to the distribution system varying between approximately 2.5 and 5 bar and at an adjustable angle to the panel, which may vary, depending on the type of impurities to be removed, between approximately 30° and 90°, and in which
gentle cleaning elements (15) are in contact with the surface of the panels to be cleaned and act simultaneously with the spraying of steam jets,
steam being applied at the same time as contact cleaning at a distance from the panel (9) to be cleaned which varies between approximately 50 mm and 300 mm.

2. Method, according to claim 1, **characterized in that** the cleaning elements (15) have a linear movement of over 1 km per hour.

3. Method, according to claims 1 or 2, **characterized in that** the cleaning elements are made of soft material.

4. Method according to claim **3**, **characterised in that** the gentle cleaning elements (15) consist of a laminar element made of silicone or a similar material with an edge (17; 18) in continuous contact with the panel (9) to be cleaned throughout the cleaning operation.

5. Method, according to any of claims 1 to 4, **characterized in that** purified water is used to generate the steam to be applied.

## Patentansprüche

1. Verfahren zum Reinigen von Solarpanelen (9), in welchem Dampf aus einem Verteilsystem (10) in mehreren einzelnen Strahlen mit einem Druck und einer Temperatur, die von der Belastbarkeit der zu reinigenden Solarpanele und den zu entfernenden Verunreinigungen abhängen, wobei die Temperatur des Dampfs zwischen etwa 150 °C und 200 °C variiert und der Dampfdruck am Eingang des Verteilsystems zwischen etwa 2,5 und 5 bar variiert, und mit einem zu der Panele einstellbaren Winkel gesprüht wird, wobei der Winkel in Abhängigkeit vom Typ der zu entfernenden Verunreinigungen zwischen etwa 30° und 90° variiert, und in welchem schonende Reinigungselemente (15) mit der Oberfläche der zu reinigenden Panelen in Kontakt sind und gleichzeitig mit dem Sprühen der Dampfstrahlen wirken, wobei der Dampf zur gleichen Zeit wie die Kontaktreinigung aufgebracht wird, und zwar in einem Abstand zu der zu reinigenden Panele (9), der zwischen etwa 50 mm und 300 mm variiert.

2. Verfahren nach Anspruch 1, **dadurch gekennzeichnet, dass** die Reinigungselemente (15) eine lineare Bewegung mit über 1 km pro Stunde aufweisen.

3. Verfahren nach Anspruch 1 oder 2, **dadurch gekennzeichnet, dass** die Reinigungselemente aus einem weichen Material hergestellt sind.

4. Verfahren nach Anspruch 3, **dadurch gekennzeichnet, dass** die schonenden Reinigungselemente (15) aus einem flächigen Element bestehen, das aus Silikon oder einem ähnlichen Material hergestellt ist und das einen Rand (17; 18) aufweist, der durchweg mit der zu reinigenden Panele (9) über den Reinigungsvorgang in Kontakt ist.

5. Verfahren nach einem der Ansprüche 1 bis 4, **dadurch gekennzeichnet, dass** gereinigtes Wasser verwendet wird, um den aufzubringenden Dampf zu erzeugen.

## Revendications

1. Procédé de nettoyage de panneaux solaires (9), dans lequel de la vapeur provenant d'un système de distribution (10) est vaporisée en de multiples jets individuels à une pression et une température qui dépendent de la résistance du panneau solaire à nettoyer et des impuretés à enlever, la température de la vapeur variant entre environ 150°C et 200°C et la pression de vapeur à l'entrée du système de distribution variant entre environ 2,5 et 5 bars et selon un angle ajustable par rapport au panneau, qui peut varier, en fonction du type d'impuretés à enlever, entre environ 30° et 90°, et dans lequel des éléments de nettoyage doux (15) sont en contact avec la surface des panneaux à nettoyer et agissent simultanément à la vaporisation des jets de vapeur, la vapeur étant appliquée au même moment que le nettoyage par contact à une distance du panneau (9) à nettoyer qui varie entre environ 50 mm et 300 mm.

2. Procédé selon la revendication 1, **caractérisé en ce que** les éléments de nettoyage (15) ont un mouvement linéaire de plus d'1 km par heure.

3. Procédé selon les revendications 1 ou 2, **caractérisé en ce que** les éléments de nettoyage sont réalisés en un matériau doux.

4. Procédé selon la revendication 3, **caractérisé en ce que** les éléments de nettoyage doux (15) sont constitués d'un élément laminaire réalisé en silicone ou en un matériau similaire avec un bord (17 ; 18) en contact continu avec le panneau (9) à nettoyer pendant toute l'opération de nettoyage.

5. Procédé selon l'une quelconque des revendications 1 à 4, **caractérisé en ce que** de l'eau purifiée est utilisée pour générer la vapeur à appliquer.
